# EUROPÄISCHE PATENTSCHRIFT

(11) **EP 3 353 874 B1**
(45) Veröffentlichungstag und Bekanntmachung des Hinweises auf die Patenterteilung: **26.05.2021**
(21) Anmeldenummer: 16766884.7
(22) Anmeldetag: 08.09.2016
(51) Int. Cl.: H02J 3/18, H02J 3/38

(54) **VERFAHREN ZUR MINIMIERUNG EINER NETZRÜCKWIRKUNG EINES PV-PARKS, WECHSELRICHTER UND PV-PARK**
METHOD FOR MINIMISING A NETWORK FEEDBACK OF A PV PARK, INVERTER AND PV PARK
PROCÉDÉ POUR RÉDUIRE AU MINIMUM UN EFFET PERTURBATEUR D'UN PARC PHOTOVOLTAÏQUE SUR UN RÉSEAU, ONDULEUR ET PARC PHOTOVOLTAÏQUE

(30) Priorität: 22.09.2015 DE 102015115957
(43) Veröffentlichungstag der Anmeldung: 01.08.2018
(73) Patentinhaber: SMA Solar Technology AG, 34266 Niestetal (DE)
(72) Erfinder: MENDE, Denis, 37247 Grossalmerode (DE); BUELO, Thorsten, 34121 Kassel (DE)
(86) Internationale Anmeldenummer: PCT/EP2016/071152
(87) Internationale Veröffentlichungsnummer: WO 2017/050585

(56) Entgegenhaltungen:
- EP-A1- 1 906 505
- EP-A1- 2 309 639
- WO-A1-2011/032265
- WO-A1-2014/012789
- DE-A1-102011 122 581
- DE-A1-102013 105 444
- US-A1- 2014 046 500

## Beschreibung

Die Erfindung betrifft ein Verfahren zur Minimierung einer Netzrückwirkung eines PV-Parks, sowie einen Wechselrichter beziehungsweise einen photovoltaischen (PV-) Park, die zur Durchführung des Verfahrens eingerichtet sind.

Die elektrische Energieversorgung aus einem Verteilnetz wird in zunehmendem Maße durch erneuerbare Energien, beispielsweise durch Photovoltaik, sichergestellt. Ein Charakteristikum solcher erneuerbaren Energieerzeugungsanlagen ist es, dass sie gegenüber konventionellen Kraftwerken nicht zentral, sondern an einer Vielzahl Stellen in das Netz eingebunden werden. Diese Einbindung von einspeisenden Anlagen in hoher Anzahl erfordert Überlegungen hinsichtlich der Netzrückwirkung einer solchen Einspeisung, um weiterhin eine ausreichende Netzqualität zur Verfügung stellen zu können. Als Folge entstehen zusätzliche Anforderungen an die dezentralen Einspeiser, damit diese einen ausreichenden Beitrag zur Sicherstellung der Netzqualität leisten. Beispielsweise wird eine Bereitstellung von Blindleistung gefordert, die einen festen oder einen variablen, kennlinienabhängigen Betrag umfassen kann. Wie in Dokument US 2014/0046500 A1 beschrieben, kann ein dezentraler Einspeiser als sogenannter STATCOM betrieben werden und durch Steuerung der Netzspannung an dessen Netzanschlusspunkt hin zu einem vorgegebenen Sollwert Übertragungsverluste im Netz verringern. Eine Einflussnahme auf die Netzspannung kann durch Bereitstellung von Blindleistung mit einem Wechselrichter wie dem in Druckschrift EP 2 309 639 A1 beschriebenen erreicht werden.

Ein anderer Ansatz ist es, dass die dezentralen Einspeiser neben der eingespeisten Wirkleistung einen solchen Anteil an Blindleistung bereitstellen, dass an deren Netzanschlusspunkt der Einfluss der Einspeisung auf Netzparameter wie die Spannung minimiert wird. In diesem Fall spricht man von einer netzrückwirkungsfreien Energieerzeugungsanlage. Hierbei sind bekannte Wechselrichter in der Lage, ihre Einspeiseparameter so zu gestalten, dass am Netzanschlusspunkt des PV-Parks vorbestimmte Spannungsverhältnisse eingehalten werden, auch wenn der entsprechende Wechselrichter von diesem Netzanschlusspunkt entfernt angeschlossen ist.

Da während der Nacht durch den PV-Park keine Wirkleistung bereitgestellt werden kann, der PV-Park aber dennoch nicht unerhebliche Netzrückwirkung durch den Austausch von Blindleistung aufweisen kann, erfolgt im Stand der Technik eine Abtrennung des PV-Parks vom Energieversorgungsnetz in dieser Zeit, oder es sind zusätzliche Blindleistungsquellen im PV-Park vorzusehen, die die ausgetauschte Blindleistung kompensieren.

Im Lichte dieser Überlegung ist es Aufgabe der vorliegenden Erfindung, dezentrale Einspeiser, insbesondere PV-Parks mit einer Vielzahl von Wechselrichtern, mit wenig apparativem Aufwand derart zu gestalten, dass deren Netzrückwirkung sowohl im Tagesbetrieb als auch im Nachtbetrieb minimiert ist, das heißt insbesondere auch, dass eine Abschaltung des PV-Parks während der Nacht nicht zu erfolgen braucht, um eine Beeinflussung der Netzqualität auszuschließen.

Zur Lösung dieser Aufgabe wird im Rahmen dieser Erfindung ein Verfahren gemäß des unabhängigen Anspruches 1 vorgestellt. Vorteilhafte Ausgestaltungen des erfindungsgemäßen Verfahrens sind in den abhängigen Ansprüchen beschrieben. Weiterhin dient ein erfindungsgemäßer Wechselrichter entsprechend dem nebengeordneten Anspruch 8, sowie ein erfindungsgemäßer PV-Park entsprechend dem nebengeordneten Anspruch 9 zur Lösung der beschriebenen Aufgabe.

Das erfindungsgemäße Verfahren dient zur Minimierung einer Netzrückwirkung eines PV-Parks auf ein an einem Netzanschlusspunkt angeschlossenes Energieversorgungsnetz, wobei der PV-Park eine in Gruppen aufgeteilte Vielzahl von Wechselrichter umfasst. Im Rahmen des Verfahrens wird für mindestens einen ersten Wechselrichter jeder Gruppe ein erster Parameter, der repräsentativ für eine erste Koppelimpedanz zwischen dem Wechselrichter und dem Netzanschlusspunkt ist, und ein zweiter Parameter bestimmt, der repräsentativ für eine zweite Koppelimpedanz zwischen der den Wechselrichter enthaltenden Gruppe und dem Netzanschlusspunkt ist. Diese Parameter werden anschließend in einer Betriebsführungseinheit des jeweiligen Wechselrichters gespeichert. In einem Tagesbetrieb des PV-Parks speist der erste Wechselrichter Blindleistung in Abhängigkeit des ersten Parameters ein, die dem Ausmaß einer von der zugrunde gelegten ersten Koppelimpedanz aufgenommenen Blindleistung entspricht. So wird erreicht, dass die durch den ersten Wechselrichter eingespeiste Blindleistung zu keinem Blindleistungsaustausch mit dem Energieversorgungsnetz führt. Als Folge kann der PV-Park im Tagesbetrieb so eingestellt werden, dass dieser auch als gesamter PV-Park keine Blindleistung mit dem Energieversorgungsnetz austauscht. Alternativ kann im Tagesbetrieb auch ein vorgegebener Zielwert einer Blindleistung angestrebt werden, die mit dem Energieversorgungsnetz ausgetauscht wird. In diesem Fall speist der erste Wechselrichter Blindleistung in Abhängigkeit des ersten Parameters ein, die dem Ausmaß der von der zugrunde gelegten ersten Koppelimpedanz aufgenommenen Blindleistung zuzüglich des Zielwertes entspricht.

In einem Nachtbetrieb werden alle Wechselrichter einer Gruppe mit Ausnahme des ersten Wechselrichters deaktiviert und Blindleistung durch den genau einen Wechselrichter in Abhängigkeit des zweiten Parameters, die dem Ausmaß einer von der jeweiligen zugrunde gelegten zweiten Koppelimpedanz aufgenommenen Blindleistung entspricht, eingespeist. Somit kann auch im Nachtbetrieb der durch die Wechselrichtergruppe verursachte ungewünschte Blindleistungsaustausch mit dem Energieversorgungsnetz über den Netzanschlusspunkt minimiert oder gänzlich vermieden werden. Als Folge wird die Netzrückwirkung des PV-Parks sowohl im Tagesbetrieb als auch im Nachtbetrieb minimiert. Ein Trennen der deaktivierten Wechselrichter vom Netz ist hierdurch überflüssig, und entsprechende Trennvorrichtungen können eingespart oder für weniger Schaltvorgänge ausgelegt und damit kostengünstiger gestaltet werden.

In einer bevorzugten Ausführungsform der Erfindung wird ausschließlich der erste Wechselrichter in jeder Gruppe zur Einspeisung von Blindleistung im Nachtbetrieb eingerichtet. Es ist aber ebenso denkbar, dass innerhalb einer Gruppe mehrere Wechselrichter zum Einspeisen von Blindleistung im Nachtbetrieb eingerichtet sind. Die Aufgabe des Einspeisens von Blindleistung im Nachtbetrieb kann dann zwischen den mehreren Wechselrichtern weitergereicht werden, zum Beispiel von Nacht zu Nacht oder mit einem anderen Wechselrhythmus. Auf diese Weise kann die individuelle Belastung der Wechselrichter verringert und deren Lebensdauer entsprechend verlängert werden. Der Wechsel zwischen den zur Einspeisung von Blindleistung eingerichteten Wechselrichtern kann beispielsweise aufgrund eines vorgegebenen Algorithmus oder durch eine Betriebsführungseinheit, die als eigenständige Komponente des PV-Parks oder als Teil eines Wechselrichters realisiert sein kann, gesteuert erfolgen. Die mehreren Wechselrichter können aber auch gleichzeitig zum Einspeisen von Blindleistung im Nachtbetrieb genutzt werden, wenn die erforderliche Blindleistung die Blindleistungskapazität eines einzelnen Wechselrichters übersteigt.

In einer weiteren vorteilhaften Ausführungsform des erfindungsgemäßen Verfahrens wird die eingespeiste Blindleistung als Funktion der Einstrahlung auf an den Wechselrichter angeschlossenen PV-Generatoren, bzw. der daraus resultierenden Wirkleistung bestimmt. Auf diese Weise kann eine der ersten Koppelimpedanz zwischen dem Wechselrichter und dem Netzanschlusspunkt zugeordnete Blindleistungskomponente gezielt ausgeglichen werden. Die Genauigkeit dieser gezielten Kompensation steigt, wenn angenommen wird, dass alle anderen an Wechselrichter des PV-Parks angeschlossene PV-Generatoren die gleiche Einstrahlung aufweisen, was in der Regel bei einem korrekt ausgelegten PV-Park der Fall sein dürfte. In diesem Fall können auch PV-Parks mit komplex verteilten Netzimpedanzen innerhalb des Parks mit geeigneten, einfachen Werten für die erste Koppelimpedanz eine vollständige oder nahezu vollständige Vermeidung eines Blindleistungsflusses über den Netzanschlusspunkt des PV-Parks erreichen.

Im Folgenden wird die Erfindung mithilfe von Figuren dargestellt, von denen
Fig. 1 eine schematische Darstellung einer beispielhaften Struktur eines PV-Parks,
Fig. 2 ein Ersatzschaltbild des PV-Parks zur erfindungsgemäßen Bestimmung von Parametern in einem Tagesbetrieb,
Fig. 3 ein Ersatzschaltbild des PV-Parks zur erfindungsgemäßen Bestimmung von Parametern in einem Nachtbetrieb, sowie
Fig. 4 ein Flussdiagramm des erfindungsgemäßen Verfahrens zeigt.

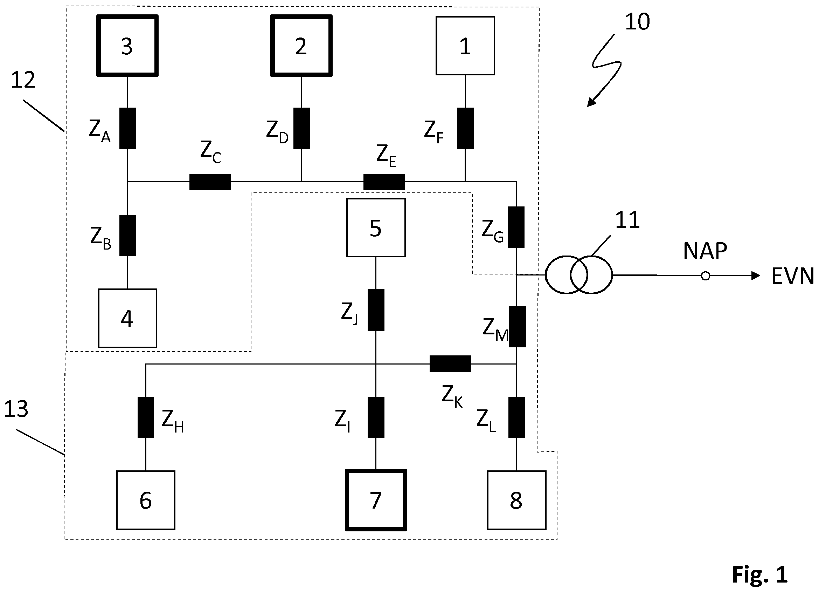

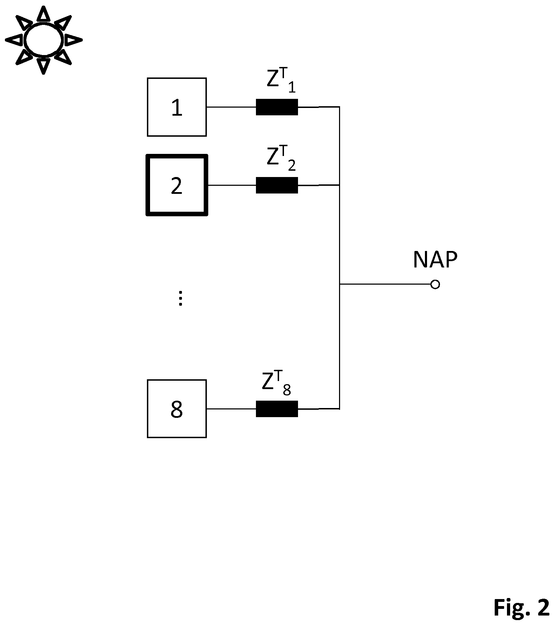

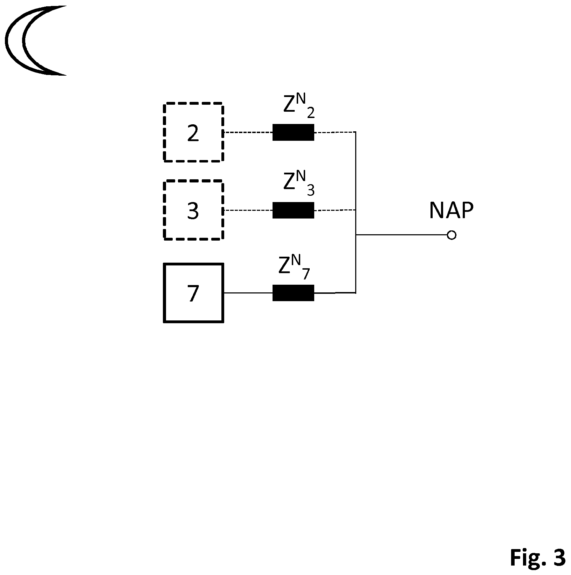

Fig. 1 zeigt eine schematische Ansicht eines PV-Parks 10, der eine Vielzahl von Wechselrichtern 1 bis 8 umfasst. Die Wechselrichter wandeln den von an ihnen angeschlossenen PV-Generatoren (der Übersichtlichkeit halber nicht als eigenständige Elemente gezeigt) erzeugten Gleichstrom in Wechselstrom um und sind über ein parkinternes Netz über einen Transformator 11 an einem Netzanschlusspunkt NAP angeschlossen, der den gemeinsamen Verbindungspunkt des Parks mit einem Energieversorgungsnetz EVN bildet. Die Impedanzen des parkinternen Netzes sind als Netzimpedanzen Z_{A},...Z_{M} der einzelnen Netzabschnitte dargestellt. Nur ein Teil der Wechselrichter, in diesem Fall beispielhaft die Wechselrichter 2, 3 und 7, sind zur Bereitstellung von Blindleistung während der Nacht eingerichtet, wenn also die PV-Generatoren keine oder vernachlässigbare Leistung erzeugen. Dies ist durch die stärkere Umrandung der Wechselrichter in der Fig. 1 versinnbildlicht. Der PV-Park ist in eine erste Gruppe 12 und eine zweite Gruppe 13 von Wechselrichtern aufgeteilt, wobei jede Gruppe mindestens einen Wechselrichter umfasst, der zur nächtlichen Bereitstellung von Blindleistung eingerichtet ist. Der Transformator 11, der eine weitere zu berücksichtigende Netzimpedanz des parkinternen Netzes darstellt, ist hierbei optional. An dessen Stelle kann auch eine direkte Verbindung des parkinternen Netzes über den Netzanschlusspunkt an das EVN treten. Die Netzimpedanzen Z_{A},...Z_{M} der einzelnen Netzabschnitte können aus einer Kenntnis von Widerständen, Kapazitäten und Induktivitäten der verbauten Komponenten abgeleitet, oder auch durch Messung in dem Fachmann bekannter Weise bestimmt werden. Insbesondere können die Reaktanzanteile der Netzimpedanzen getrennt nach kapazitiver und induktiver Reaktanz erfasst werden. Die Verteilung der parkinternen Impedanzen kann durch ein vereinfachtes Ersatzschaltbild des PV-Parks angenähert werden. Für den Tagesbetrieb des PV-Parks ist dies in Fig. 2 gezeigt, für den Nachtbetrieb in Fig. 3.

Während des Tages, wenn alle Wechselrichter die von ihren PV-Generatoren erzeugte Energie einspeisen, ist im Ersatzschaltbild jeder Wechselrichter n direkt über eine ihm zugeordnete äquivalente Tagesimpedanz Z^{T}ₙ mit dem Netzanschlusspunkt NAP verbunden. Die Werte der äquivalenten Tagesimpedanzen Z^{T}ₙ werden dabei durch bekannte mathematische Verfahren so bestimmt, dass der Blindleistungsfluss über den Netzanschlusspunkt unter allen denkbaren Betriebsbedingungen des PV-Parks durch das Ersatzschaltbild möglichst genau den Blindleistungsfluss des realen PV-Parks mit seiner komplexeren Verteilung der Netzimpedanzen beschreibt. In einer Variante dieses Verfahrens werden die in den Netzimpedanzen Z_{A},...Z_{M} der einzelnen Netzabschnitte bei gegebenen Betriebsbedingungen aufgenommenen Blindleistungen in den einzelnen Wechselrichtern als Verursacher zugeordnete Komponenten zerlegt. Die äquivalenten Tagesimpedanzen Z^{T}ₙ werden dann so gewählt, dass die in diesen bei gleichen Betriebsbedingungen aufgenommenen Blindleistungen der Summe aller dem entsprechenden Wechselrichter n als Verursacher zugeordneten Komponenten entspricht. Auch hier kann eine Trennung nach kapazitivem und induktivem Reaktanzanteil der äquivalenten Tagesimpedanz Z^{T}ₙ erfolgen, und diese Werte können getrennt im Wechselrichter hinterlegt und verwendet werden.

Diese bestimmten äquivalenten Tagesimpedanzen Z^{T}ₙ beschreiben den PV-Park in seinem momentanen Ausbauzustand und können zumindest so lange verwendet werden, wie der Park hinsichtlich seiner internen Struktur unverändert bleibt. In einer vorteilhaften Ausführungsform wird die Bestimmung der äquivalenten Tagesimpedanzen Z^{T}ₙ unter der Annahme durchgeführt, dass die Einstrahlung auf alle PV-Generatoren des PV-Parks identisch ist. Betriebsbedingungen umfassen hierbei die Blindleistungs- und Wirkleistungswerte der einzelnen Wechselrichter, sowie die Netzspannung am Netzanschlusspunkt. Jeder Wechselrichter des PV-Parks ist zur Speicherung des ihm zugeordneten äquivalenten Wertes der Tagesimpedanz Z^{T}ₙ eingerichtet und kann diesen zur Steuerung seiner Einspeiseparameter, insbesondere zur Festlegung seiner aktuellen Blindleistung, verwenden.

Während der Nacht sind lediglich die zur Bereitstellung von nächtlicher Blindleistung eingerichteten Wechselrichter mit dem Netz verbunden, zumindest aber ein solcher Wechselrichter jeder Gruppe. Demzufolge beschränkt sich das Ersatzschaltbild für den PV-Park auf die noch an das Netz angeschlossenen Wechselrichter, den Wechselrichter 7 der ersten Gruppe 12, sowie den Wechselrichter 2 und/oder den Wechselrichter 3 der zweiten Gruppe 13. Diese sind über ihnen zugeordnete äquivalente Nachtimpedanzen Z^{N}₂, _{3,7} direkt mit dem Netzanschlusspunkt verbunden. Analog zum Betriebsfall am Tage werden dabei die äquivalenten Nachtimpedanzen Z^{N}₂, _{3,7} durch die mathematischen Verfahren, auf die bereits vorstehend Bezug genommen wurde, so bestimmt, dass der Blindleistungsfluss über den Netzanschlusspunkt unter allen denkbaren Betriebsbedingungen des PV-Parks durch das Ersatzschaltbild möglichst genau den Blindleistungsfluss des realen PV-Parks mit seiner komplexeren Verteilung der Netzimpedanzen beschreibt. In einer Variante dieses Verfahrens werden die während der Nacht in den Netzimpedanzen Z_{A},...Z_{M} der einzelnen Netzabschnitte bei gegebenen Betriebsbedingungen aufgenommenen Blindleistungen in den einzelnen Gruppen als Verursacher zugeordnete Komponenten zerlegt. Die äquivalenten Nachtimpedanzen Z^{N}ₙ werden dann so gewählt, dass die in diesen aufgenommenen Blindleistungen der Summe aller der den ersten Wechselrichter umfassenden Gruppe als Verursacher zugeordneten Komponenten entspricht. Damit unterscheiden sich die Nachtimpedanzen in der Regel von den Tagesimpedanzen, da nachts ein Teil der Wechselrichter deaktiviert ist, wobei die Netzimpedanzen Z_{A},...Z_{M} von deren Netzabschnitten Teil des parkinternen Netzes bleiben und allein durch die äquivalenten Nachtimpedanzen der nachtaktiven Wechselrichter berücksichtigt werden. Auch hier kann eine Trennung nach kapazitivem und induktivem Reaktanzanteil der äquivalenten Nachtimpedanz Z^{N}ₙ erfolgen, und diese Werte können getrennt im Wechselrichter hinterlegt und verwendet werden. Jeder der zur Bereitstellung von nächtlicher Blindleistung eingerichteten Wechselrichter ist auch zur Speicherung des ihm zugeordneten äquivalenten Wertes der Nachtimpedanz Z^{N}ₙ eingerichtet und kann diesen zur Steuerung seiner aktuellen Blindleistung während des Nachtbetriebs verwenden.

Bei der vorstehenden Beschreibung ist es ein Spezialfall, die Steuerung der Wechselrichter im Tagesbetrieb und/oder im Nachtbetrieb derart einzustellen, dass der Blindleistungsfluss über den Netzanschlusspunkt minimal, idealerweise gleich Null wird, so dass eine Rückwirkung des PV-Parks auf das Energieversorgungsnetz minimiert ist. Dieses Ziel kann zumindest in guter Annäherung erreicht werden, indem jeder Wechselrichter, der in das parkinterne Netz einspeist, soviel Blindleistung beisteuert, wie in der ihm zugeordneten äquivalenten Netzimpedanz Z^{T}ₙ, Z^{N}ₙ dem Netz entzogen wird. Diesen Zielwert der Blindleistung kann der Wechselrichter bei Kenntnis der entsprechenden Werte der Netzimpedanz und der Spannung an seinen Anschlussklemmen leicht selber bestimmen.

In einem bevorzugten Ausführungsbeispielen kann das gemeinsame Ziel der Wechselrichter innerhalb des PV-Parks darauf ausgerichtet sein, am Netzanschlusspunkt einen Zielwert der gesamten Blindleistung des PV-Parks bereitzustellen, so dass der PV-Park einen aktiven Beitrag zur Aufrechterhaltung der Netzqualität leisten kann. Der Zielwert kann ein diskreter Wert sein, der zum Beispiel vom Betreiber des EVN vorgegeben ist und dem PV-Park bzw. den einzelnen Wechselrichtern über geeignete Kommunikationskanäle bekannt gemacht wird, oder eine vom aktuellen Zustand des EVN abhängige Größe, insbesondere einen von der Netzspannung U_{NAP} am Netzanschlusspunkt abhängigen Blindleistungswert Q(U_{NAP}). Zur Realisierung dieses gemeinsamen Zieles muss jeder Wechselrichter einen Blindleistungswert beisteuern, der den Wert der durch die ihm zugeordneten äquivalenten Netzimpedanzen Z^{T}ₙ, Z^{N}ₙ entzogenen Blindleistung um einen ihm zugeordneten Bruchteil des gesamten Blindleistungszielwerts Q(U_{NAP}) übersteigt. Dabei kann der Wechselrichter zusätzlich einen Spannungsabfall zwischen der Spannung am Netzanschlusspunkt und der Spannung an den Anschlussklemmen des Wechselrichters, also einen Spannungsabfall über der äquivalenten Netzimpedanz Z^{T}ₙ, Z^{N}ₙ, berücksichtigen, um die erforderliche Blindleistung Q(U_{NAP}) anhand der Netzspannung an seinen Anschlussklemmen zu bestimmen.

Sofern mehrere Wechselrichter einer Gruppe zur Bereitstellung von Blindleistung im Nachtbetrieb eingerichtet sind, kann in einer bevorzugten Ausführungsform der Erfindung die Rolle des nachtaktiven Wechselrichters zwischen diesen Wechselrichtern getauscht werden. Es ist zum Beispiel denkbar, dass jede Nacht ein anderer Wechselrichter die Blindleistung im Nachtbetrieb bereitstellt. Der Wechsel der Rolle kann dabei nach einem vordefinierten Schema erfolgen oder über eine übergeordnete Betriebsführungseinheit des PV-Parks koordiniert werden. Eine Abstimmung der geeigneten Wechselrichter untereinander über einen Kommunikationskanal zwischen diesen ist ebenfalls denkbar. Hierdurch werden die Belastung der Komponenten der beteiligten Wechselrichter und damit die Wartungskosten des PV-Parks gesenkt.

Gerade im Nachtbetrieb kann die Situation auftreten, dass zu einem betrachteten Zeitpunkt die geforderte Blindleistung eines aktiven Wechselrichters höher als die maximal erzeugbare Blindleistung des Wechselrichters ist. Sofern die entsprechende Gruppe zumindest einen weiteren Wechselrichter umfasst, die zur Bereitstellung von Blindleistung eingerichtet sind, ist es denkbar, dass dieser durch den aktiven Wechselrichter oder durch eine übergeordnete Kontrolleinheit des PV-Parks zusätzlich aktiviert wird, sodass die zu erzeugende Blindleistung von diesen beiden Wechselrichtern gemeinsam erzeugt wird. Bei der gemeinsamen Bereitstellung der Blindleistung durch beide (oder mehrere) Wechselrichter stimmen sich bevorzugt die beteiligten Wechselrichter über Kommunikationsprotokolle ab, insbesondere weil sich die zu berücksichtigende Netzimpedanz dann auf die beteiligten Wechselrichter verteilt. Sollte im Verlaufe der Nacht die geforderte Blindleistung wieder dauerhaft soweit absinken, dass sie durch einen einzelnen Wechselrichter bereitgestellt werden kann, kann der zusätzlich aktivierte Wechselrichter wieder deaktiviert werden. Grundsätzlich ist es hierbei natürlich auch möglich, zusätzlich einen Wechselrichter einer anderen Gruppe vorübergehend zu aktivieren.

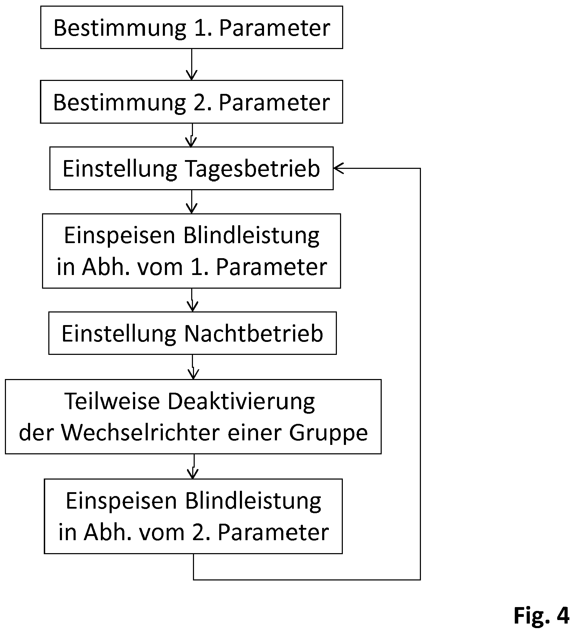

In Fig. 4 ist eine bevorzugte Ausführungsform eines erfindungsgemäßen Verfahrens als Flussdiagramm dargestellt. In einem ersten Schritt 40 wird für mindestens einen ersten Wechselrichter jeder Gruppe eines PV-Parks ein erster Parameter bestimmt, der repräsentativ für eine Koppelimpedanz zwischen dem ersten Wechselrichter und dem Netzanschlusspunkt ist, zum Beispiel die vorstehend beschriebene äquivalente Tagesimpedanz Z^{T}₁. Der erste Parameter wird in einer Betriebsführungseinheit des ersten Wechselrichters gespeichert.

In einem zweiten Schritt 41 wird für den ersten Wechselrichter jeder Gruppe zusätzlich ein zweiter Parameter bestimmt, der repräsentativ für eine zweite Koppelimpedanz zwischen der den ersten Wechselrichter enthaltenen Gruppe und dem Netzanschlusspunkt ist, zum Beispiel die vorstehend beschriebene äquivalente Nachtimpedanz Z^{N}₁. Auch der zweite Parameter wird in der Betriebsführungseinheit des ersten Wechselrichters gespeichert. Der erste Schritt 40 und der zweite Schritt 41 sollten vor der ersten Inbetriebnahme des PV-Parks durchgeführt werden, danach können sie regelmäßig erneut durchgeführt werden, um die Werte des ersten und zweiten Parameters zu aktualisieren.

Im Rahmen eines Tagesbetriebs des PV-Parks, der durch einen dritten Schritt 42 eingeleitet wird, speiste der erste Wechselrichter in einem vierten Schritt 43 Blindleistung in Abhängigkeit des ersten Parameters ein. Der erste Wechselrichter bestimmt diese Blindleistung mithilfe des ersten Parameters derart, dass die Blindleistung dem Ausmaß der von der zugrunde gelegten äquivalenten Tagesimpedanz Z^{T}₁ aufgenommenen Blindleistung entspricht. Diese Art der Einspeisung von Blindleistung kann parallel in gleicher Weise auch von den anderen während des Tagesbetriebes aktiven Wechselrichtern durchgeführt werden.

Nachdem der PV-Park in einem fünften Schritt 44 auf eine Nachtbetrieb umgestellt hat, werden in einem sechsten Schritt 45 diejenigen Wechselrichter deaktiviert, die während der Nacht keine Blindleistung bereitstellen sollen. Im vorliegenden Beispiel verbleibt somit lediglich der erste Wechselrichter als einziger Wechselrichter der ihm zugeordneten Gruppe in einem aktiven Zustand. Dieser speist in einem siebten Schritt 46 Blindleistung in Abhängigkeit des zweiten Parameters ein, so dass die eingespeiste Blindleistung dem Ausmaß der von der zugrunde gelegten äquivalenten Nachtimpedanz Z^{N}₁ aufgenommenen Blindleistung entspricht.

In dieser Ausführung der Erfindung speisen demnach alle Wechselrichter lediglich den Anteil an Blindleistung ein, der in den ihnen zugeordneten äquivalenten Koppelimpedanzen Z^{T}ₙ, Z^{N}ₙ aufgenommen wird. Auf diese Weise wird erreicht, dass am Netzanschlusspunkt kein oder zumindest ein vernachlässigbarer Blindleistungsfluss erreicht wird, da die eingespeiste Blindleistung der innerhalb des PV-Parks aufgenommenen Blindleistung zumindest näherungsweise entspricht. Dieses Ziel wird erreicht, ohne dass es einer aktiven Messung des Blindleistungsflusses am Netzanschlusspunkt, sowie einer Kommunikation von Messwerten zum ersten Wechselrichter bedarf. Der PV-Park wird dadurch inhärent blindleistungsminimiert und weist daher nahezu keine Rückwirkung auf das angeschlossene Energieversorgungsnetz auf, ohne dass es zusätzlicher Komponenten zum aktiven Ausgleich von Blindleistungsflüssen bedarf.

In einer weiteren Ausführungsform der Erfindung, in der ein Betriebsziel des PV-Parks nicht darin besteht, den Blindleistungsfluss am Netzanschlusspunkt zu minimieren, sondern einen vorgegebenen Blindleistungszielwert zu erreichen, wird von den aktiven Wechselrichtern, insbesondere vom ersten Wechselrichter, zusätzlich ein Blindleistungsanteil eingespeist, der einem dem ersten Wechselrichter zugeordneten Bruchteil des Blindleistungszielwertes entspricht. Auch in diesem Fall wird das Betriebsziel des PV-Parks ohne den Einsatz zusätzlicher Komponenten zum aktiven Ausgleich von Blindleistungsflüssen erreicht.

Nach Beendigung des Nachbetriebes kann der Wechselrichter über den Schritt 42 erneut in den Tagesbetrieb überführt werden.

### Bezugszeichenliste

- 1...8: Wechselrichter
- 10: PV-Park
- 11: Transformator
- 12, 13: Gruppe
- 41...46: Schritt
- Z_{A}...Z_{N}: Parkimpedanz
- z^{T}₁ ... Z^{T}₈: äquivalente Tagesimpedanz
- Z^{N}₂, Z^{N}₃, Z^{N}₇: äquivalente Nachtimpedanz
- NAP: Netzanschlusspunkt
- EVN: Energieversorgungsnetz

## Patentansprüche

1. Verfahren zur Minimierung einer Netzrückwirkung eines PV-Parks (10) auf ein an einem Netzanschlusspunkt angeschlossenes Energieversorgungsnetz, wobei der PV-Park (10) eine in Gruppen (12, 13) aufgeteilte Vielzahl von Wechselrichtern (1-8) aufweist, umfassend:
- für mindestens einen ersten Wechselrichter (2, 3, 7) jeder Gruppe (12, 13) Bestimmen eines ersten Parameters, der repräsentativ für eine erste Koppelimpedanz (Z^{T}₂, Z^{T}₃, Z^{T}₇) zwischen dem ersten Wechselrichter (2, 3, 7) und dem Netzanschlusspunkt ist und Bestimmen eines zweiten Parameters, der repräsentativ für eine zweite Koppelimpedanz (Z^{N}₂, Z^{N}₃, Z^{N}₇) zwischen der den ersten Wechselrichter (2, 3, 7) enthaltenden Gruppe (12, 13) und dem Netzanschlusspunkt ist,
- Speichern des ersten und des zweiten Parameters in einer Betriebsführungseinheit des ersten Wechselrichters (2, 3, 7),
- in einem Tagesbetrieb des PV-Parks (10) Einspeisen von Blindleistung durch den ersten Wechselrichter (2, 3, 7) in Abhängigkeit des ersten Parameters, die dem Ausmaß einer von der jeweiligen zugrunde gelegten ersten Koppelimpedanz (Z^{T}₂, Z^{T}₃, Z^{T}₇) aufgenommenen Blindleistung entspricht, und
- in einem Nachtbetrieb Deaktivieren aller Wechselrichter einer Gruppe (12, 13) mit Ausnahme des ersten Wechselrichters (2, 3, 7), wobei die deaktivierten Wechselrichter mit dem Energieversorgungsnetz verbunden bleiben, und Einspeisen von Blindleistung durch den ersten Wechselrichter (2, 3, 7) in Abhängigkeit des zweiten Parameters, wobei die eingespeiste Blindleistung dem Ausmaß einer von der jeweiligen zugrunde gelegten zweiten Koppelimpedanz (Z^{N}₂, Z^{N}₃, Z^{N}₇) aufgenommenen Blindleistung entspricht, so dass der durch die Wechselrichtergruppe (12, 13) verursachte Blindleistungsaustausch mit dem Energieversorgungsnetz über den Netzanschlusspunkt minimiert oder gänzlich vermieden wird.

2. Verfahren nach Anspruch 1, wobei innerhalb einer Gruppe (12, 13) ausschließlich der erste Wechselrichter (2, 3, 7) zum Einspeisen von Blindleistung im Nachtbetrieb eingerichtet ist.

3. Verfahren nach Anspruch 1, wobei innerhalb einer Gruppe (12, 13) mehr als ein Wechselrichter zum Einspeisen von Blindleistung im Nachtbetrieb eingerichtet ist und wobei ein Einspeisen von Blindleistung im Nachtbetrieb zwischen den zur Einspeisung von Blindleistung eingerichteten Wechselrichtern wechselt.

4. Verfahren nach Anspruch 3, wobei der Wechsel zwischen den zur Einspeisung von Blindleistung eingerichteten Wechselrichtern aufgrund eines vorgegebenen Algorithmus oder durch eine Betriebsführungseinheit gesteuert wird.

5. Verfahren nach einem der vorangehenden Ansprüche, wobei die eingespeiste Blindleistung als Funktion der Einstrahlung auf an den Wechselrichter angeschlossenen PV-Generatoren bestimmt wird.

6. Verfahren nach Anspruch 5, wobei die eingespeiste Blindleistung unter der Annahme bestimmt wird, dass die an allen anderen Wechselrichtern des PV-Parks (10) angeschlossenen PV-Generatoren die gleiche Einstrahlung aufweisen.

7. Verfahren nach einem der vorangehenden Ansprüche, wobei die Wechselrichter bei der Bestimmung der eingespeisten Blindleistung zusätzlich eine Blindleistungsvorgabe eines Betreibers des Energieversorgungsnetzes an den PV-Park (10) an dessen Netzanschlusspunkt berücksichtigen.

8. Verfahren nach einem der vorangehenden Ansprüche, wobei die eingespeiste Blindleistung als Funktion der Netzspannung an Anschlussklemmen des jeweiligen Wechselrichters bestimmt wird.

9. Wechselrichter (2, 3, 7), eingerichtet zum Speichern des ersten und zweiten Parameters und zur Durchführung des Tagesbetriebes und des Nachtbetriebes des Verfahrens nach einem der Ansprüche 1 bis 8.

10. PV-Park (10), eingerichtet zur Durchführung des Verfahrens nach einem der Ansprüche 1 bis 8.

## Claims

1. A method for minimizing grid feedback of a PV park (10) to an energy supply grid connected thereto at a point of common coupling, wherein the PV park (10) comprises a plurality of inverters (1-8) divided into groups (12, 13), said method comprising:
- for at least a first inverter (2, 3, 7) of each group (12, 13), determining a first parameter representative of a first coupling impedance (Z^{T}₂, Z^{T}₃, Z^{T}₇) between the first inverter (2, 3, 7) and the point of common coupling and determining a second parameter representative of a second coupling impedance (Z^{N}₂, Z^{N}₃, Z^{N}₇) between the group (12, 13) containing the first inverter (2, 3, 7) and the point of common coupling,
- storing the first and the second parameter in an operating control unit of the first inverter (2, 3, 7),
- in a daytime operation of the PV park (10), feeding in of reactive power by the first inverter (2, 3, 7) depending on the first parameter, said reactive power corresponding to the magnitude of a reactive power absorbed by the respective underlying first coupling impedance (Z^{T}₂, Z^{T}₃, Z^{T}₇), and
- in a nighttime operation, deactivating all the inverters of a group (12, 13) with the exception of the first inverter (2, 3, 7), wherein the deactivated inverters remain connected to the energy supply grid, and feeding in of reactive power by the first inverter (2, 3, 7) depending on the second parameter, wherein the reactive power fed in corresponds to a magnitude of a reactive power absorbed by the respective underlying second coupling impedance (Z^{N}₂, Z^{N}₃, Z^{N}₇), such that the exchange of reactive power with the energy supply grid via the point of common coupling caused by the inverter group (12, 13) is minimized or fully avoided.

2. The method as claimed in claim 1, wherein, within a group (12, 13), exclusively the first inverter (2, 3, 7) is configured to feed in reactive power in nighttime operation.

3. The method as claimed in claim 1, wherein, within a group (12, 13), more than one inverter is configured to feed in reactive power in nighttime operation and wherein the in-feed of reactive power during nighttime operation alternates between the inverters configured to feed in reactive power.

4. The method as claimed in claim 3, wherein the alternation between the inverters configured to feed in reactive power is controlled based on a prescribed algorithm or by an operating control unit.

5. The method as claimed in one of the preceding claims, wherein the reactive power fed in is determined as a function of the insolation on PV generators connected to the inverters.

6. The method as claimed in claim 5, wherein the reactive power fed in is determined under the assumption that the PV generators connected to all the other inverters of the PV park (10) have the same insolation.

7. The method as claimed in one of the preceding claims, wherein, in the determination of the reactive power fed in, the inverters also take into account a reactive power target of an operator of the energy supply grid for the PV park (10) at the point of common coupling thereof.

8. The method as claimed in one of the preceding claims, wherein the reactive power fed in is determined as a function of the grid voltage at connection terminals of the respective inverter.

9. An inverter (2, 3, 7), configured to store the first and second parameter and to perform daytime operation and nighttime operation of the method as claimed in one of claims 1 to 8.

10. A PV park (10), configured to perform the method as claimed in one of claims 1 to 8.

## Revendications

1. Procédé pour minimiser une perturbation sur le réseau d'un parc photovoltaïque (10) sur un réseau d'alimentation électrique connecté à un point de raccordement au réseau, dans lequel le parc photovoltaïque (10) comprend une pluralité d'onduleurs (1-8) divisés en groupes (12, 13), comprenant :
- pour au moins un premier onduleur (2, 3, 7) de chaque groupe (12, 13), la détermination d'un premier paramètre représentatif d'une première impédance de couplage (Z^{T}₂, Z^{T}₃, Z^{T}₇) entre le premier onduleur (2, 3, 7) et le point de raccordement au réseau, et la détermination d'un second paramètre représentatif d'une seconde impédance de couplage (Z^{N}₂, Z^{N}₃, Z^{N}₇) entre le groupe (12, 13) comprenant le premier onduleur (2, 3, 7) et le point de raccordement au réseau,
- enregistrement des premier et second paramètres dans une unité de gestion de fonctionnement du premier onduleur (2, 3, 7),
- au fonctionnement de jour du parc photovoltaïque (10), l'alimentation en puissance réactive par le premier onduleur (2, 3, 7) en fonction du premier paramètre, qui correspond à l'ampleur d'une puissance réactive absorbée par la première impédance de couplage sous-jacente respective (Z^{T}₂, Z^{T}₃, Z^{T}₇), et
- au fonctionnement de nuit, la désactivation de tous les onduleurs d'un groupe (12, 13) à l'exception du premier onduleur (2, 3, 7), les onduleurs désactivés restant connectés au réseau d'alimentation électrique, et l'alimentation en puissance réactive par le premier onduleur (2, 3, 7) en fonction du deuxième paramètre dans lequel la puissance réactive injectée correspond à l'ampleur d'une puissance réactive absorbée par la seconde impédance de couplage sous-jacente respective (Z^{N}₂, Z^{N}₃, Z^{N}₇), de sorte que l'échange de puissance réactive avec le réseau d'alimentation électrique via le point de raccordement au réseau causé par le groupe d'onduleurs (12, 13) est minimisé ou complètement évité.

2. Procédé selon la revendication 1, dans lequel, au sein d'un groupe (12, 13) exclusivement, le premier onduleur (2, 3, 7) est configuré pour l'alimentation en puissance réactive au fonctionnement de nuit.

3. Procédé de la revendication 1, dans lequel, au sein d'un groupe (12, 13), plus d'un onduleur est configuré pour alimenter en puissance réactive au fonctionnement de nuit, et dans lequel l'alimentation en puissance réactive au fonctionnement de nuit alterne entre les onduleurs configurés pour alimenter en puissance réactive.

4. Procédé selon la revendication 3, dans lequel l'alternance entre les onduleurs configurés pour l'alimentation en puissance réactive est commandée sur la base d'un algorithme prédéterminé ou par une unité de gestion de fonctionnement.

5. Procédé selon une des revendications précédentes, dans lequel la puissance réactive injectée est déterminée en fonction de l'irradiation sur les générateurs photovoltaïques connectés à l'onduleur.

6. Procédé selon la revendication 5, dans lequel la puissance réactive injectée est déterminée en supposant que les générateurs photovoltaïques connectés à tous les autres onduleurs du parc photovoltaïque (10) ont la même irradiation.

7. Procédé selon l'une des revendications précédentes, dans lequel les onduleurs prennent en compte en plus, lors de la détermination de la puissance réactive injectée, une consigne de puissance réactive d'un opérateur du réseau d'alimentation électrique du parc photovoltaïque (10) à son point de raccordement au réseau.

8. Procédé selon l'une des revendications précédentes, dans lequel la puissance réactive injectée est déterminée en fonction de la tension du réseau aux bornes de connexion de l'onduleur respectif.

9. Onduleur (2, 3, 7) agencé pour enregistrer les premiers et seconds paramètres et pour réaliser le fonctionnement de jour et le fonctionnement de nuit du procédé selon l'une des revendications 1 à 8.

10. Parc photovoltaïque (10) agencé pour mettre en oeuvre le procédé selon l'une des revendications 1 à 8.
